# EUROPÄISCHE PATENTANMELDUNG

(11) **EP 1 892 631 A2**
(43) Veröffentlichungstag der Anmeldung: **27.02.2008**
(21) Anmeldenummer: 07112514.0
(22) Anmeldetag: 16.07.2007
(51) Int. Cl.: G06F 13/38, G06F 13/40

(54) **Verfahren und Vorrichtung zum Einspeisen von Daten in einen seriellen Datenbus**

(30) Priorität: 21.08.2006 DE 102006039123
(71) Anmelder: ROBERT BOSCH GMBH, 70442 Stuttgart (DE)
(72) Erfinder: Zender, Arne, 31162 Bad Salzdetfurth (DE); Vollmer, Vasco, 31162 Bad Salzdetfurth (DE); Sonnenrein, Thomas, 31167 Bockenem (DE); Busse, Michael, 30161 Hannover (DE); Weber, Alexander, 31135 Hildesheim (DE)

(57) **Zusammenfassung**

Verfahren zum Einspeisen von zu übertragenden Daten (4) in einen seriellen Datenbus (3), wobei ein Auslastungsmaß für den seriellen Datenbus (3) ermittelt wird und in Abhängigkeit von dem ermittelten Auslastungsmaß die zu übertragenden Daten in den seriellen Datenbus (3) eingekoppelt werden oder zurückgehalten werden. Und Gateway-Einrichtung (1) zur Einspeisung von zu übertragenden Daten (4) in mindestens einen seriellen Datenbus (3) mit einer an den seriellen Datenbus (3) gekoppelten Steuereinrichtung (2), welche ein Auslastungsmaß für den seriellen Datenbus (3) ermittelt und die zu übertragenden Daten (4) empfängt, und welche in Abhängigkeit von dem ermittelten Auslastungsmaß die zu übertragenden Daten (4) entweder in den seriellen Datenbus (3) einkoppelt oder zurückhält.

## Beschreibung

Die vorliegende Erfindung betrifft ein Verfahren zum Einspeisen von zu übertragenden Daten in einen seriellen Datenbus sowie eine Gateway-Einrichtung zur Einspeisung von zu übertragenden Daten.

### Stand der Technik

Serielle Datenbusse werden heutzutage einfach und zuverlässig in vielen komplexen technischen Systemen eingesetzt. Insbesondere in Kraftfahrzeugen werden vermehrt serielle Bussysteme eingebaut, um einen Datenaustausch zwischen elektronischen Komponenten im Fahrzeug zu ermöglichen. Typischerweise werden CAN (Controller Area Network), FlexRay-und LIN (Local Interconnect Network) Datenbusse im Automobilbereich eingesetzt. Dabei ist ein Bussystem jeweils aus einem Übertragungsmedium, wie einer Verkabelung und daran angeschlossenen Bussteuereinrichtungen oder Bus-Controllern ausgebildet. Weitere Steuergeräte, die üblicherweise als ECU (Electronic Control Units) bezeichnet werden, sind über den Bus-Controller an das jeweilige Bussystem angeschlossen und können so Daten in den Datenbus einspeisen oder von diesem abgreifen. Datenbusse im Kraftfahrzeug werden beispielsweise zur Übertragung von Navigations- und auch Audiodaten zwischen einem im Kofferraum vorgehaltenen Datenträger-Laufwerk und verarbeitenden Geräten im Armaturenbrett oder zwischen die Motorfunktionen überwachenden Sensoren und einer entsprechenden Motorsteuerung verwendet.

Der einfachen und robusten Ausführung von seriellen Datenbussen steht der Nachteil gegenüber, dass ein jeweiliger Bus-Controller einen exklusiven Zugriff auf das Übertragungsmedium erhalten muss, sodass in seriellen Architekturen immer nur ein einziger Bus-Controller Daten in den Datenbus zur selben Zeit einspeisen kann. Andere, an denselben Datenbus angekoppelte Bus-Controller, müssen dann warten, bis die laufende Übertragung abgeschlossen ist.

Um dennoch einen zuverlässigen Datentransfer über serielle Bussysteme zu gewährleisten, wurden verschiedene Zugriffszuteilungsverfahren für den Zugriff auf den Datenbus entwickelt (MAC = Medium Access Control). Beispielsweise können den an den Datenbus angekoppelten Bus-Controllern Prioritätswerte zugewiesen werden, sodass Anfragen für einen Zugriff auf den Datenbus in der Reihenfolge absteigender Priorität behandelt werden. Es ist auch üblich, feste Zeitschlitze den einzelnen Bus-Controllern für einen Zugriff auf den Datenbus zuzuordnen, während derer sie Daten in den Datenbus einschreiben können bzw. eine Übertragung auf diesem stattfindet.

Die DE 100 44 828 beschreibt ein aufwändiges Verfahren, insbesondere für den Einsatz in Ethernet-Architekturen, bei der eine Auslastung eines Ethernet-ähnlichen Netzes, an das mehrere Sende-/Empfangsstationen angekoppelt sind, gesteuert wird. Dabei ist vorgesehen, dass eine jeweilige Sendestation bei einem gewünschten Zugriff auf den Datenbus eine Reservierungsanfrage mit voraussichtlich benötigten Ressourcenmengen, wie Übertragungskapazität und zeitliche Längen, in das Bussystem einschreibt. Ein Einsatz im Automobilbereich derartiger aufwändiger Busprotokolle und Ethernet-Architekturen ist eher ungeeignet. Vielmehr sind dort einfache und zuverlässige Arbitrierungsverfahren in der Art des seriellen CAN Busses notwendig.

Da jedoch auch große Datenmengen in serielle Datenbusse von Kraftfahrzeugen eingespeist werden müssen, können sich durch hohe Auslastungen der Datenbusse für einzelne Sendestationen bzw. angekoppelte Einrichtungen Verzögerungen in der Datenübertragung ergeben. Es werden daher meist Erfahrungswerte für den Auslastungsgrad des jeweiligen Bussystems angenommen und die Systeme derart ausgelegt, dass der Auslastungsgrad der Bussysteme unterhalb festgelegter Grenzen bleibt. KFZ-Bussysteme werden üblicherweise mit einer maximalen Auslastung, welche z.B. als das Verhältnis der Belegzeit des Datenbusses zu einer Gesamtzeit beschrieben werden kann, betrieben, um Sendeverzögerungen beherrschbar zu halten. Bei einer zukünftigen immer stärkeren Vernetzung weiterer Elemente im Kraftfahrzeug und zusätzlich einzubauenden Bus-Controllern sowie die Vernetzung mehrerer Datenbusse untereinander ist jedoch eine Prognose für die jeweilige Busauslastung kaum noch möglich.

Die der Erfindung zugrunde liegende Problematik besteht somit darin, ein Verfahren zum Einspeisen von zu übertragenden Daten in einen seriellen Datenbus zu schaffen, das einen zuverlässigen Datentransfer über den Datenbus bei vielen auch in der Anzahl veränderlichen Bus-Controllern ermöglicht.

### Offenbarung der Erfindung

Die Erfindung schafft ein Verfahren zum Einspeisen von zu übertragenden Daten in einen seriellen Datenbus gemäß Patentanspruch 1 sowie eine Gateway-Einrichtung zur Einspeisung von zu übertragenden Daten in mindestens einen seriellen Datenbus mit den Merkmalen des Patentanspruchs 7.

Demgemäß ist ein Verfahren zum Einspeisen von zu übertragenden Daten in einen seriellen Datenbus vorgesehen, wobei ein Auslastungsmaß für den seriellen Datenbus ermittelt wird und in Abhängigkeit von dem ermittelten Auslastungsmaß die zu übertragenden Daten in den seriellen Datenbus eingekoppelt oder zurückgehalten werden.

Die erfindungsgemäße Gateway-Einrichtung zur Einspeisung von zu übertragenden Daten in mindestens einen seriellen Datenbus weist eine an den seriellen Datenbus gekoppelte Steuereinrichtung auf, welche ein Auslastungsmaß für den seriellen Datenbus ermittelt und die zu übertragenden Daten empfängt. Dabei koppelt die Steuereinrichtung in Abhängigkeit von dem eventuellen Auslastungsmaß die zu übertragenden Daten entweder in den seriellen Datenbus ein, oder sie hält die zu übertragenden Daten zurück.

Gemäß der Erfindung wird vor einem Einkoppeln oder Einspeisen von zu übertragenden Daten zunächst die Auslastung des betreffenden Datenbusses ermittelt. Dies kann beispielsweise durch regelmäßiges Abfragen des seriellen Datenbusses erfolgen. Dies hat den Vorteil, dass der jeweilige serielle Datenbus nicht überlastet werden kann und die Auslastung des Übertragungsmediums, also des seriellen Datenbusses, ein als vertretbar eingeschätztes Maß nicht überschreitet. Gemäß des erfindungsgemäßen Verfahrens bzw. in der erfindungsgemäßen Gateway-Einrichtung werden die zu übertragenden Daten somit praktisch zunächst gefiltert und nur dann in den Datenbus weitergeleitet, wenn dies nicht zu einer übermäßigen Beanspruchung des Datenbusses führt.

Vorzugsweise werden die folgenden Verfahrensschritte durchgeführt:
- Entgegennehmen der zu übertragenden Daten;
- Ermitteln eines Auslastungsmaßes für den seriellen Datenbus;
- Einkoppeln der zu übertragenden Daten in den Datenbus, falls das ermittelte Auslastungsmaß einen vorgegebenen Referenzwert unterschreitet, oder
- Zurückhalten der zu übertragenden Daten, falls das ermittelte Auslastungsmaß einen vorgegebenen Referenzwert überschreitet.

Das erfindungsgemäße Verfahren ist insbesondere dann von Vorteil, wenn mehrere, als oder mit erfindungsgemäßen Gateway-Einrichtungen ausgeführte, Bus-Controller an demselben Datenbus angekoppelt sind oder beispielsweise eine Gateway-Einrichtung als Schnittstelle zwischen mehreren seriellen Datenbussen angeordnet ist. Dann ist die Steuereinrichtung an mehrere serielle Datenbusse gekoppelt. Vorzugsweise werden die zurückgehaltenen Daten zwischengespeichert, beispielsweise in einem Zwischenspeicher und erst bei Vorliegen eines Auslastungsmaßes, das unterhalb eines vorgegebenen Grenzwertes liegt, in den Datenbus eingespeist.

Bei einem prioritätsgesteuerten seriellen Datenbus kann ein entsprechendes Auslastungsmaß z.B. durch Einkoppeln von Daten in den Datenbus mit einer niedrigen Priorität erfolgen. Der entsprechenden Steuereinrichtung in einer Gateway-Einrichtung wird es nur dann gelingen, Datenpakete mit der niedrigsten Priorität auf den Datenbus zu geben, wenn dieser nicht mit Datenpaketen belegt ist, die eine höhere Priorität aufweisen. Somit kann die Anzahl von regelmäßig auf den Datenbus gegebenen niedrigsten Prioritätsdaten über einen vorgegebenen Zeitraum als Maß für die Auslastung des seriellen Datenbusses angesehen werden.

Als Auslastungsmaß kann auch ein über einen Referenzzeitraum über den seriellen Datenbus übertragenes Datenvolumen herangezogen werden, wobei alle über den seriellen Datenbus übertragenen Daten in einem jeweiligen Referenzzeitraum detektiert werden. Falls das erfindungsgemäße Verfahren in allen Bus-Controllern oder Gateway-Einrichtungen durchgeführt wird, die an einen gemeinsamen seriellen Datenbus angeschlossen sind, ist eine Überlastung des Datenbusses praktisch ausgeschlossen, da bei Überschreiten eines vorgegebenen Referenzwertes für das Auslastungsmaß zunächst keine weiteren Daten in den Datenbus eingespeist werden.

Es besteht auch die Möglichkeit, lediglich zusätzliche externe Kommunikationsteilnehmer mit dem erfindungsgemäßen Verfahren auszustatten. Dann ist ein Schutz der ursprünglichen, internen Steuereinrichtungen vor einem zu großen Datenvolumen auf dem Bus gewährleistet. Insbesondere ermöglicht die Erfindung, dass zusätzliche mit einer erfindungsgemäßen Gateway-Vorrichtung ausgestattete Bus-Controller an das jeweilige Netzwerk zugefügt werden können, ohne dass eine aufwändige Prognose der sich ändernden Busauslastung erfolgen muss.

Weitere vorteilhafte Ausgestaltungen der Erfindung sind Gegenstand der Unteransprüche sowie der im Folgenden beschriebenen Ausführungsbeispiele.

### Kurze Beschreibung der Zeichnungen

Im Folgenden wird die Erfindung anhand bevorzugter Ausführungsbeispiele unter Bezugnahme auf die beigelegten Figuren näher erläutert. Es zeigt dabei:
- Figur 1:: eine erste Ausführungsform einer erfindungsgemäßen Gateway-Einrichtung;
- Figur 2:: ein Ablaufdiagramm einer ersten Variante des erfindungsgemäßen Verfahrens zum Einspeisen von zu übertragenden Daten;
- Figur 3:: eine zweite Ausführungsform einer erfindungsgemäßen Gateway-Einrichtung; und
- Figur 4:: ein Ablaufdiagramm einer zweiten Variante eines erfindungsgemäßen Verfahrens zum Einspeisen von zu übertragenden Daten.

### Ausführungsformen der Erfindung

In den Figuren sind, sofern nichts anderes angegeben ist, gleiche oder funktionsgleiche Elemente mit denselben Bezugszeichen versehen worden.

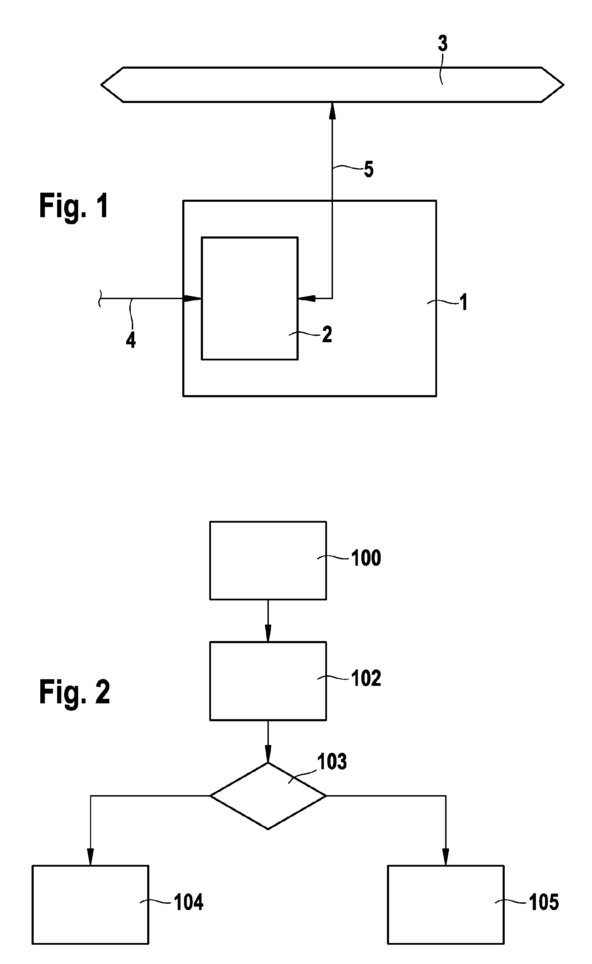

Die Figur 1 zeigt eine erste Ausführungsform der erfindungsgemäßen Gateway-Einrichtung 1. Die Gateway-Einrichtung 1 weist eine Steuereinrichtung 2 auf, die an einen seriellen Datenbus 3 über geeignete Leitungen 5 gekoppelt ist. Die Gateway-Einrichtung 1 kann beispielsweise in einem Bus-Controller vorgehalten werden, der Zugriff auf den Datenbus 3 sucht. Zu übertragende Daten 4 sind der Steuereinrichtung 2 zugeführt. Die Steuereinrichtung 2 überprüft bei vorliegenden zu übertragenden Daten 4 die Auslastung des seriellen Datenbusses 3 und entscheidet dann, ob die vorliegenden zu übertragenden Daten 4 auf den Datenbus 3 zu legen bzw. einzuspeisen sind oder zurückgehalten werden. Die Daten werden zurückgehalten, falls das Auslastungsmaß des Datenbusses 3 größer als ein Referenzwert ist, d.h. eine weitere Belastung des Datenbusses mit Datenverkehr würde zu unverhältnismäßig hohen zeitlichen Verzögerungen für alle darauf vorliegenden Datenübertragungen führen.

Ein von der Steuereinrichtung 2 durchgeführtes Verfahren ist schematisch in der Figur 2 als Ablaufdiagramm dargestellt. Der Steuereinrichtung 2 liegen im Schritt 100 die über den Datenbus 3 zu übertragenden Daten 4 vor. Dies kann beispielsweise die von einem Sensor ermittelte Kühlmitteltemperatur bei einem Kraftfahrzeug sein. Diese Daten müssen z.B. der Motorsteuerung über den geeigneten Datenbus 3 übermittelt werden. Im Schritt 102 ermittelt die Steuereinrichtung, welche über die Leitungen 5 an den Datenbus 3 gekoppelt ist, ein Auslastungsmaß für den seriellen Datenbus 3.

Es besteht z.B. die Möglichkeit, dass die Steuereinrichtung ständig den Datenverkehr auf dem seriellen Datenbus 3 überwacht und als ein Auslastungsmaß das Verhältnis der Belegtzeit des Datenbusses 3, also die Zeit, in dem über einen Referenzzeitraum Datenverkehr auf dem Datenbus herrscht, mit dem Referenzzeitraum verwendet. Das Auslastungsmaß kann dann beispielsweise in einer Prozentzahl angegeben werden. Im Schritt 103 wird überprüft, ob das Auslastungsmaß einen vorbestimmten Referenzwert, bei einem CAN-Bus typischerweise 40%, über- oder unterschreitet. Liegt das ermittelte Auslastungsmaß unterhalb dieser beispielhaft angenommenen 40%, werden die zur Übertragung vorliegenden Daten in den Datenbus 3 eingespeist. Dies geschieht im Schritt 104. Falls jedoch das ermittelte Auslastungsmaß bereits über 40% liegt, werden die Daten 4 im Schritt 105 verworfen. Eine Überlastung des seriellen Datenbusses 3 kann daher nicht erfolgen.

Eine weitere Möglichkeit der Bestimmung eines Auslastungsmaßes besteht beispielsweise darin, durch die Steuereinrichtung 2 ständig Daten mit einer für das Bus-Protokoll niedrigsten Priorität auf den Datenbus 3 zu geben. Gemäß einem prioritätsgesteuerten Arbitrierungsverfahren werden bei gleichzeitig vorliegenden Anfragen von verschiedenen Bus-Controllern für eine Datenübertragung nur diejenigen zu übertragenden Daten auf dem Datenbus zugelassen, deren Prioritätswert am höchsten ist. Somit lässt sich anhand der auf dem Datenbus 3 vorliegenden Datenpakete mit der niedrigsten Priorität, wobei die niedrigstprioren Datenpakete aus Effizienzgründen beispielsweise keine Nutzdaten enthalten, erkennen, dass der Datenbus 3 nicht ausgelastet ist. Aus dem Anteil der niedrigstprioren Daten an einem Gesamtdatenvolumen in einem bestimmten Referenzzeitraum ergibt sich daher die Auslastung oder ein Auslastungsmaß für den Datenbus.

Bei einem FlexRay-Bus werden beispielsweise den an den Bus angekoppelten Bus-Controllern Zeitschlitze zugewiesen, in denen ein Zugriff auf den FlexRay-Bus möglich ist. Bei diesem Round-Robin-ähnlichen Verfahren können die jeweiligen Bus-Controller entweder Daten in ihrem zugewiesenen Zeitschlitz auf den Datenbus geben oder diesen Zeitschlitz ungenutzt verstreichen lassen. Eine entsprechend ausgestaltete Steuereinrichtung 2 der erfindungsgemäßen Gateway-Einrichtung könnte z.B. den gesamten Datenverkehr auf dem Datenbus 3 überwachen und die auf dem Datenbus übertragenen Daten in einem Zwischenspeicher puffern. Aus der Anzahl der so gepufferten Datenpakete, welche über den Datenbus übertragen wurden, und der Gesamtzahl der in dem jeweiligen Überwachungszeitraum liegenden Zeitschlitze ergibt sich ein Maß für die Auslastung des FIexRay-Busses.

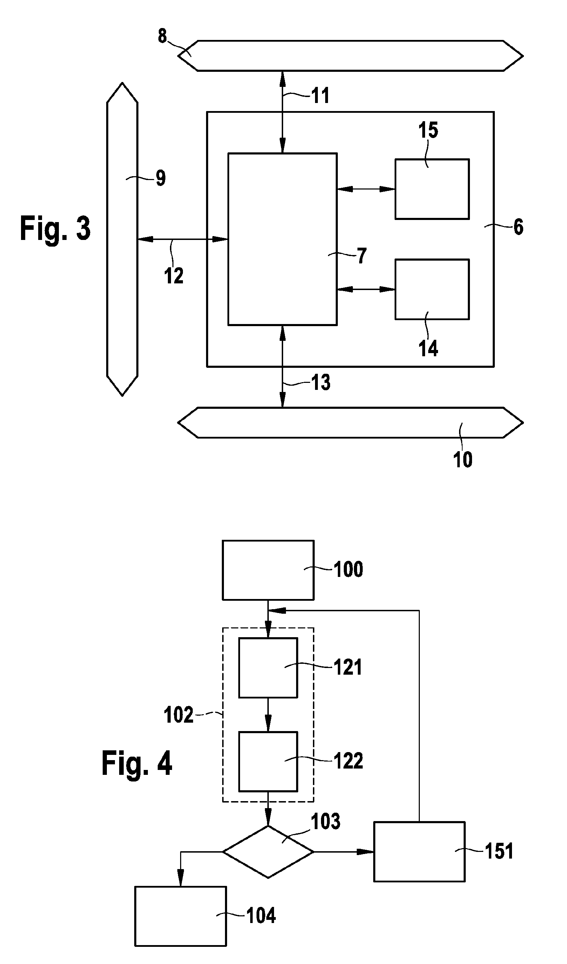

Die Figur 3 zeigt eine zweite Ausführungsform einer erfindungsgemäßen Gateway-Einrichtung.

Die Ausführungsform der erfindungsgemäßen Gateway-Einrichtung eignet sich z.B. zum Einsatz als Gateway zwischen mehreren seriellen Datenbussen. Dabei wird das erfindungsgemäße Verfahren zum Einspeisen bzw. in der Gateway-Funktion zum Weiterleiten von Daten aus einem Quellbus in einen Zielbus vorteilhaft eingesetzt.

Die Gateway-Einrichtung 6 weist eine Steuereinrichtung 7 auf, die an drei serielle Datenbusse 8, 9, 10 über entsprechende Leitungen 11, 12, 13 gekoppelt ist. Die seriellen Datenbusse 8, 9, 10 können beispielsweise nach unterschiedlichen Protokollen arbeiten. Im Anwendungsbereich Kraftfahrzeug ist denkbar, dass der Bus 8 als CAN-Bus, der Bus 9 als FlexRay-Bus und der Bus 10 als WLAN ausgebildet ist. Die Gateway-Einrichtung 6 hat dabei die Aufgabe, Daten von einem Quellbus, beispielsweise von dem WLAN-Bus 10 in den CAN-Bus 8 als Zielbus weiterzuleiten. Häufig werden beispielsweise bei der Fahrzeugfernwartung Daten in einen fahrzeugseitigen Wartungscomputer eingeschrieben oder ausgelesen, was auf der Werkstattseite einfach über ein WLAN-Netzwerk und mit entsprechender WLAN-Schnittstelle auf Fahrzeugseite erfolgen kann. Da die typischen Übertragungsraten der unterschiedlichen Bussysteme stark voneinander abweichen, muss die Gateway-Einrichtung 6 dies bei der Weiterleitung von Daten berücksichtigen. Typische Übertragungsraten bei einem CAN-Bus 8 liegen beispielsweise bei 1 MBit/s, bei FlexRay-Systemen bei 10 MBit/s, bei LIN-Bussen bei 0,02 MBit/s und bei WLAN-Netzwerken um die 54 MBit/s.

Die Gateway-Einrichtung 6 weist ferner einen Referenzspeicher 15 mit Referenzwerten für Auslastungsmaße auf und einen Zwischenspeicher 14 zum Zwischenspeichern von zu übertragenden Daten.

In einer beispielhaften Anwendungssituation ist es z.B. notwendig, ein Software-Update für einen an einen fahrzeuginternen CAN-Bus 8 vorgesehenen Controller durchzuführen. Dabei werden in der Werkstatt über den WLAN-Bus 10 die entsprechenden Softwaredaten bereitgestellt. Aufgabe der Gateway-Einrichtung 6 ist nun, ohne den CAN-Bus 8 übermäßig zu belasten, die entsprechenden Softwaredaten von dem Quelldatenbus 10 in Zieldatenbus 8 einzuspeisen.

In Figur 4 ist eine mögliche Ausgestaltung des erfindungsgemäßen Verfahrens zum Einspeisen der Daten als Ablaufdiagramm dargestellt. Die Verfahrensschritte werden von der Steuereinrichtung 7 durchgeführt. In einem ersten Schritt 100 liegen die zu übertragenden Daten auf dem WLAN-Datenbus 10 vor und werden von der Steuereinrichtung 7 entgegengenommen. Die Steuereinrichtung 7 ermittelt im Verfahrensschritt 102 in regelmäßigen Abständen, beispielsweise alle 0,5 Sekunden, ein Auslastungsmaß des seriellen Zieldatenbusses, also des CAN-Busses 8. Dies kann beispielsweise erfolgen, indem über einen Referenzzeitraum, z.B. eine halbe Sekunde, das über den Datenbus 8 abgewickelte Datenvolumen ermittelt wird. Es kann davon ausgegangen werden, dass das Datenvolumen im Referenzzeitraum, also in dem hier betrachteten Fall pro halber Sekunde, proportional zur Auslastung des Datenbusses 8 ist. Somit wird in einem Unterschritt 121 das Datenvolumen von der Steuereinrichtung 7 ermittelt und im Unterschritt 122 ein Verhältnis zwischen dem Datenvolumen und dem Referenzzeitraum berechnet.

Im Schritt 103 vergleicht die Steuereinrichtung 7 den berechneten Wert für das Auslastungsmaß des Datenbusses 8 mit in dem Referenzspeicher 15 abgelegten Referenzwerten. Beispielsweise ist für jeden an die Gateway-Einrichtung 6 gekoppelten Datenbus 8, 9, 10 ein Referenzwert bekannt und im Referenzspeicher 15 abgespeichert. Liegt der Wert des berechneten Auslastungsmaßes unterhalb des dem CAN-Datenbus 8 zugeordneten Referenzwerts, werden im Schritt 104 die zu übertragenden Daten 4 in den CAN-Bus 8 eingespeist. Falls das Auslastungsmaß den vorgegebenen Referenzwert überschreitet, veranlasst die Steuereinrichtung 7, dass im Schritt 151 die zu übertragenden Daten 4 im Zwischenspeicher 14 abgelegt werden. Anschließend erfolgt erneut die kontinuierliche Überwachung der Auslastung des Zieldatenbusses 8 über die Schritte 102 und ein Vergleich mit den Referenzwerten im Schritt 103. So ist ausgeschlossen, dass die Daten 4 für das Software-Update verloren gehen, wenn der CAN-Datenbus 8, der eine deutlich niedrigere Übertragungsbandbreite aufweist als der WLAN-Quelldatenbus 10, bereits stark ausgelastet ist.

Zusätzlich zu der Funktion der Zielbus-Zustandsüberwachung bzw. der regelmäßigen Ermittlung der Bus-Auslastung kann die Steuereinrichtung 7 optional weitere Filterfunktionen auf die zu übertragenden Daten 4 anwenden. Es ist beispielsweise denkbar, dass bestimmte zu übertragende Daten verworfen werden, da sie als schädlich, weil z.B. Computerviren tragend, erkannt werden.

Die Erfindung schafft somit ein vielseitig einsetzbares Verfahren zum Einspeisen von zu übertragenden Daten in einen seriellen Datenbus. Der erfindungsgemäße Einsatz in beispielsweise einer Gateway-Einrichtung, die in einem Bus-Controller integriert ist oder die als Schnittstelle zwischen mehreren Datenbussen fungiert, ermöglicht zuverlässigen Datentransfer, da die jeweilige Zielbus-Auslastung für die zu übertragenden Daten kontinuierlich überprüft wird. Auch wenn an einen Datenbus zusätzliche Gateway-Einrichtungen angekoppelt werden, besteht nicht die Gefahr, dass der Bus überlastet wird, da gemäß dem erfindungsgemäßen Verfahren eine Überprüfung der Buslast erfolgt.

Obwohl die vorliegende Erfindung anhand bevorzugter Ausführungsbeispiele näher erläutert wurde, ist sie nicht darauf beschränkt, sondern vielfältig modifizierbar. Die hier genannten seriellen Bus-Systeme FlexRay, CAN, LIN, WLAN, können durch andere ersetzt werden. Der Einsatz der Erfindung ist nicht auf Kraftfahrzeuge mit Datenbussen beschränkt, sondern lässt sich auch in anderen Netzwerkarchitekturen verwenden.

## Patentansprüche

1. Verfahren zum Einspeisen von zu übertragenden Daten (4) in einen seriellen Datenbus (3), wobei ein Auslastungsmaß für den seriellen Datenbus (3) ermittelt wird und in Abhängigkeit von dem ermittelten Auslastungsmaß die zu übertragenden Daten in den seriellen Datenbus (3) eingekoppelt werden oder zurückgehalten werden.

2. Verfahren nach Anspruch 1,
wobei die folgenden Verfahrensschritte durchgeführt werden:
a) Entgegennehmen der zu übertragenden Daten (100);
b) Ermitteln eines Auslastungsmaßes für den seriellen Datenbus (102);
c1) Einkoppeln der zu übertragenden Daten in den Datenbus (104), falls das ermittelte Auslastungsmaß einen vorgegebenen Referenzwert unterschreitet, oder
c2) Zurückhalten der zu übertragenden Daten (105), falls das ermittelte Auslastungsmaß einen vorgegebenen Referenzwert überschreitet.

3. Verfahren nach Anspruch 1 oder 2,
wobei das Auslastungsmaß des seriellen Datenbusses (3) durch regelmäßiges Abfragen des seriellen Datenbusses (3) erfolgt.

4. Verfahren nach mindestens einem der Ansprüche 1-3,
wobei das Auslastungsmaß eines prioritätsgesteuerten seriellen Datenbusses (3) durch Einkoppeln von Daten mit einer niedrigsten Priorität ermittelt wird.

5. Verfahren nach mindestens einem der Ansprüche 1-4,
wobei alle über den seriellen Datenbus (3) übertragenen Daten in einem Referenzzeitraum ermittelt werden und ein in dem Referenzzeitraum übertragenes Datenvolumen als Auslastungsmaß ermittelt wird.

6. Verfahren nach mindestens einem der Ansprüche 1-5,
wobei die zurückgehaltenen Daten zwischengespeichert werden (151).

7. Gateway-Einrichtung (1) zur Einspeisung von zu übertragenden Daten (4) in mindestens einen seriellen Datenbus (3) mit einer an den seriellen Datenbus (3) gekoppelten Steuereinrichtung (2), welche ein Auslastungsmaß für den seriellen Datenbus (3) ermittelt und die zu übertragenden Daten (4) empfängt, und welche in Abhängigkeit von dem ermittelten Auslastungsmaß die zu übertragenden Daten (4) entweder in den seriellen Datenbus (3) einkoppelt oder zurückhält.

8. Gateway-Einrichtung (6) nach Anspruch 7,
wobei die Gateway-Einrichtung einen Zwischenspeicher (14) aufweist, welcher zurückgehaltene Daten zwischenspeichert.

9. Gateway-Einrichtung (6) nach Anspruch 7 oder 8,
wobei die Steuereinrichtung (7) an mehrere serielle Datenbusse (8, 9, 10) gekoppelt ist.

10. Gateway-Einrichtung (1, 6) nach mindestens einem der Ansprüche 7 - 9,
wobei mindestens ein serieller Datenbus als CAN-, FlexRay-, LIN- oder WLAN-Bus ausgeführt ist.

11. Gateway-Einrichtung (1, 6) nach mindestens einem der Ansprüche 7 - 10,
wobei die Steuereinrichtung (2, 7) ein Verfahren nach mindestens einem der Ansprüche 1- 6 ausführt.
